# EUROPEAN PATENT APPLICATION

(11) **EP 2 544 346 A1**
(43) Date of publication of application: **09.01.2013**
(21) Application number: 11750611.3
(22) Date of filing: 28.02.2011
(51) Int. Cl.: H02M 3/155, B60K 6/22, B60K 6/442, B60K 6/46, B60K 6/485, B60L 7/14, B60L 9/18, H02M 7/48, H02P 27/06, B60L 11/14

(54) **LOAD DRIVING DEVICE**

(30) Priority: 02.03.2010 JP 2010045873
(71) Applicant: Honda Motor Co., Ltd., Minato-ku Tokyo 107-8556 (JP)
(72) Inventor: ITO Yoshihiro, Saitama 351-0193 (JP); KUROKAWA, Manabu, Saitama 351-0193 (JP); SAITO, Osamu, Saitama 351-0193 (JP)
(74) Representative: Feller, Frank
(86) International application number: PCT/JP2011/054547
(87) International publication number: WO 2011/108501

(57) **Abstract**

The disclosed load driving device is provided with a converter which has two switching elements connected in series and which converts the DC voltage outputted by a capacitor to a DC voltage of a different level, an inverter which converts the DC voltage outputted from the converter to an AC voltage and applies the same to a rotary inductive load, and a condenser arranged in parallel with and between the converter and the inverter. One of the two switching elements configuring a portion of the power supply path from the capacitor to the rotary inductive load is a normally-on type semiconductor element. As a consequence, the power generated by regenerative operation of the rotary inductive load can be stored in the capacitor by means of a simple structure even if the control unit or the converter fail.

## Description

### TECHNICAL FIELD

The present invention relates to load drive apparatuses for driving rotary inductive loads by supply of power from batteries.

### BACKGROUND ART

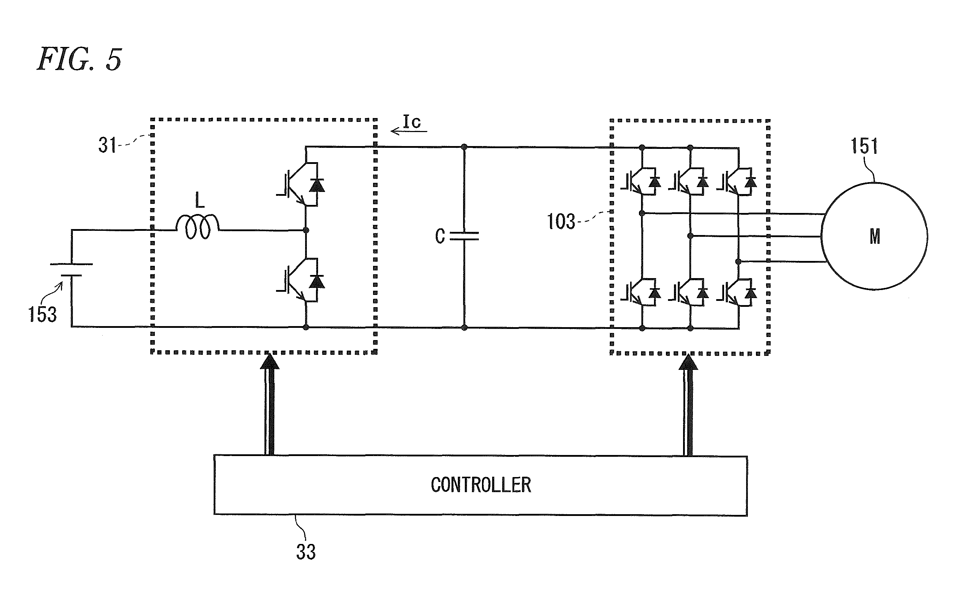

FIG. 5 illustrates an exemplary system for driving a motor. In the system, a boost converter (converter) 31 and an inverter 103 are provided between a battery 153 for outputting a DC high voltage (e.g., 100 V to 200 V) and a rotary inductive load 151 such as a motor or a generator. A smoothing capacitor C is provided in parallel between the converter 31 and the inverter 103.

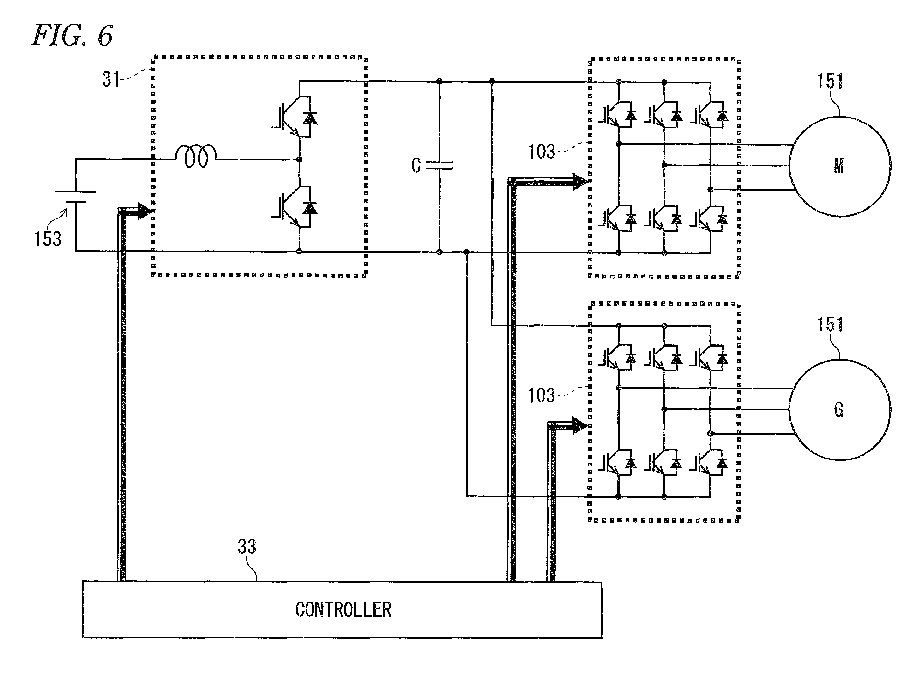

The converter 31 and the inverter 103 each have transistors serving as normally-off elements. Free wheel diodes are connected in parallel to the respective transistors. The converter 31 performs a switching operation for alternately turning ON/OFF the upper and lower transistors, thereby boosting an output voltage of the battery 153. Further, the inverter 103 converts an output voltage of the converter 31 into a three-phase (U, V and W) AC voltage by performing a switching operation on the transistors. A controller 33 controls the switching operations performed on the respective transistors included in the converter 31 and the inverter 103. When two loads such as a motor and a generator are provided as illustrated in FIG. 6, the inverter 103 is provided in parallel for each of the loads.

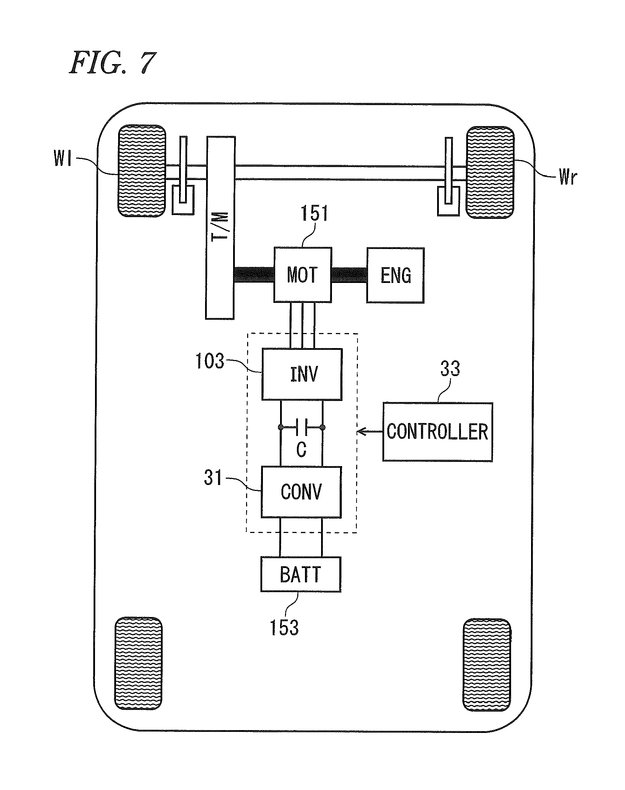

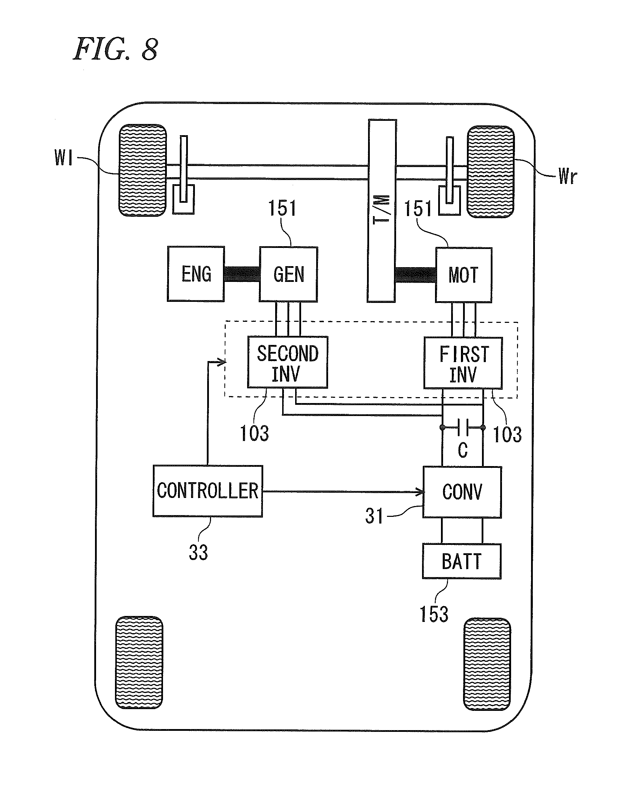

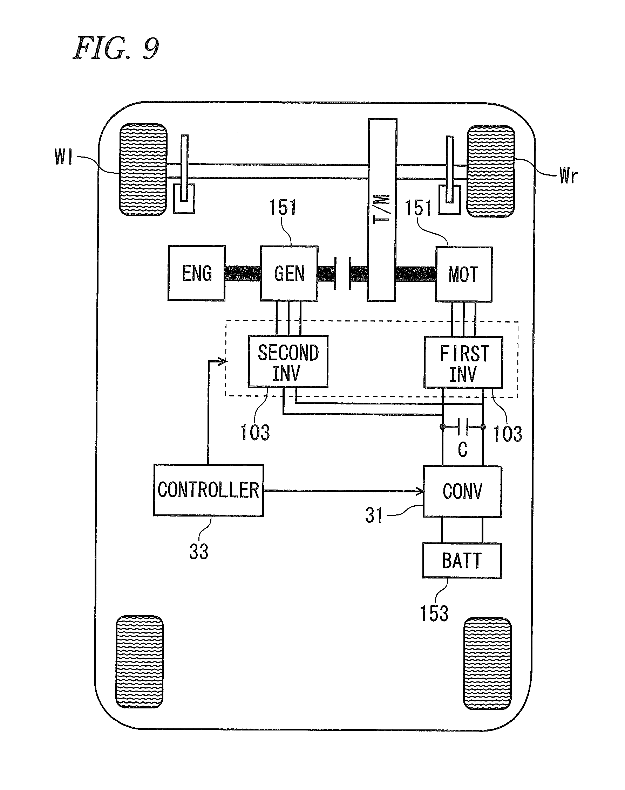

The system illustrated in FIG. 5 is installed on a so-called "parallel hybrid vehicle" illustrated in FIG. 7, for example. On the other hand, the system illustrated in FIG. 6 is installed on a so-called "series hybrid vehicle" illustrated in FIG. 8 or a so-called "series/parallel switching hybrid vehicle" illustrated in FIG. 9, for example. The hybrid vehicle illustrated in FIG. 7 runs by a driving force generated by a motor MOT and/or an engine ENG, and a drive shaft of the motor MOT is directly connected to a drive shaft of the engine ENG. On the other hand, the hybrid vehicle illustrated in FIG. 8 runs by a driving force generated by a motor MOT. An engine ENG of the series hybrid vehicle is used only for power generation, and power generated by a generator GEN by a driving force of the engine ENG is charged in the battery 153 or supplied to the motor MOT. In each of these hybrid vehicles, power generated by a regenerative operation of the motor MOT or the generator GEN is charged in the battery 153 via the inverter 103 and the converter 31.

In the event of failure of the controller 33 installed on the hybrid vehicle, the switching operations of the converter 31 and the inverter 103 will not be performed. As a result, all the transistors of the converter 31 and the inverter 103 enter OFF states. As mentioned above, the free wheel diodes are connected in parallel to the respective transistors. A cathode of each free wheel diode is connected to a collector of the associated transistor, and an anode of each free wheel diode is connected to an emitter of the associated transistor. Accordingly, when all the transistors of the converter 31 and the inverter 103 are in OFF states, regenerative power of the motor or generator is stored in the capacitor C. However, when the capacitor C falls into an excessively charged state, a component of the converter 31 or the inverter 103 might be broken by a terminal voltage of the capacitor C in which overvoltage has occurred. The excessively charged state of the capacitor C may also similarly occur in the event of failure of the converter 31.

In a load drive apparatus 100 of Patent Document 1, as illustrated in FIG. 10, upon occurrence of an abnormal condition in a boost converter 12 or an inverter 14, a system relay SMR1 is turned ON and a system relay SMR2 is turned OFF. As a result, power stored in a capacitor C2 is returned to a battery B via the system relay SMR1 and a limiting resistor 11. Then, when voltages of ends of the capacitor C2 are each reduced to a battery voltage, the system relays SMR1 and SMR3 are turned OFF, and residual charges in the capacitor C2 are discharged through a discharge resistor 18.

### PRIOR ART REFERENCE

### PATENT DOCUMENT

Patent Document 1: JP-2005-143259-A

### DISCLOSURE OF THE INVENTION

### PROBLEM TO BE SOLVED BY THE INVENTION

However, the load drive apparatus 100 of Patent Document 1 requires the system relays SMR1 to SMR3, the limiting resistor 11 and the discharge resistor 18 in order to reduce the voltages of the ends of the capacitor C2 and to discharge the residual charges. Consequently, the number of components is increased, and the resulting circuit is complicated. Furthermore, the increase in the number of components causes an increase in cost, which also results in an increase in size of the apparatus. Thus, the increase in the number of components is undesirable.

An object of the present invention is to provide a load drive apparatus that allows power, generated by a regenerative operation of a rotary inductive load, to be stored in a battery in a simple configuration even in the event of failure of a controller or a converter.

### MEANS FOR SOLVING THE PROBLEM

Claim 1 provides a load drive apparatus, including:
a converter (e.g., a boost converter 101 in embodiment) which has two switching elements (e.g., transistors Tru and Trl in embodiment) connected in series and through which a DC voltage, outputted from a battery (e.g., a battery 153 in embodiment), is converted into a DC voltage of a different level;
an inverter (e.g., an inverter 103 in embodiment) through which the DC voltage, outputted from the converter, is converted into an AC voltage and the AC voltage is applied to a rotary inductive load (e.g., a rotary inductive load 151 in embodiment); and
a capacitor (e.g., a smoothing capacitor C in embodiment) provided between the converter and the inverter so as to be in parallel to the converter and the inverter,
wherein one of the two switching elements, which constitutes part of a power supply path extending from the battery to the rotary inductive load, is a normally-on type semiconductor element.

Claim 2 provides the load drive apparatus, further including:
a switch section (e.g., a relay unit 205 in embodiment) having
   a first path opening/closing unit (e.g., a positive-side main relay RS1, a negative-side main relay RS2 and a preliminary charge relay RS3 in embodiment) for opening/closing the power supply path,
   a second path opening/closing unit (e.g., a discharge relay RS4 in embodiment) connected in series and provided in parallel to the capacitor so as to be located closer to the rotary inductive load than the first path opening/closing unit, and
   a resistor (e.g., a discharge resistor R2 in embodiment);
a storage capacity deriving section (e.g., a controller 207 in embodiment) for deriving a storage capacity of the battery based on a charge and discharge current or an output voltage of the battery; and
a switch controller (e.g., the controller 207 in embodiment) for controlling, when no switching operation is performed on the two switching elements of the converter, the switch section
   so as to open the first path opening/closing unit and close the second path opening/closing unit when the storage capacity of the battery is higher than a threshold value, and
   so as to close the first path opening/closing unit and open the second path opening/closing unit when the storage capacity of the battery is equal to or lower than the threshold value.

Claim 3 provides the load drive apparatus,
wherein the rotary inductive load is used as a driving source for a vehicle and is connected to a wheel of the vehicle via a power transmission path through which connection/disconnection for power transmission between the rotary inductive load and the wheel cannot be performed.

### EFFECTS OF THE INVENTION

According to Claims 1 to 3, no switching operation is performed on the two switching elements of the converter in the event of failure of the converter or the controller for controlling operations of the converter and the inverter. In this case, one of the two switching elements of the converter, which constitutes part of a current path extending from the battery to the rotary inductive load, is a normally-on type switching element and is thus in an ON state. Accordingly, power generated by a regenerative operation of the rotary inductive load can be charged in the battery via the inverter 103 and the normally-on type switching element.

According to Claims 2 to 3, in the event of failure of the converter or the controller for controlling operations of the converter and the inverter, regenerative power of the rotary inductive load can be charged in the battery when the battery is not fully charged, and the regenerative power can be consumed by the resistor when the battery is fully charged. Thus, the regenerative power can be charged or consumed in accordance with the storage capacity of the battery without being stored in the capacitor.

### BRIEF DESCRIPTION OF THE DRAWINGS

FIG. 1 illustrates a system including a load drive apparatus according to a first embodiment.
FIG. 2 illustrates a system including a load drive apparatus according to another embodiment.
FIG. 3 illustrates a system including a load drive apparatus according to a second embodiment.
FIG. 4 illustrates a process in a controller 207 to control a relay unit 205 in accordance with an SOC of a battery 153.
FIG. 5 illustrates an exemplary system for driving a motor.
FIG. 6 illustrates another exemplary system for driving a motor.
FIG. 7 illustrates a hybrid vehicle on which the system of FIG. 5 is installed.
FIG. 8 illustrates a hybrid vehicle on which the system of FIG. 6 is installed.
FIG. 9 illustrates a hybrid vehicle on which the system of FIG. 6 is installed.

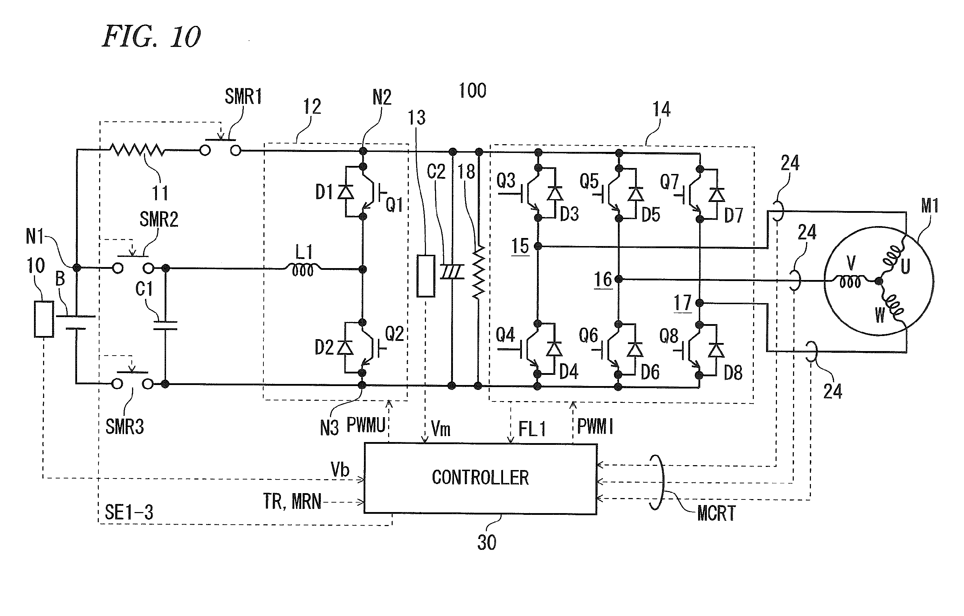

FIG. 10 illustrates a load drive apparatus of Patent Document 1.

### BEST MODE FOR CARRYING OUT THE INVENTION

Embodiments will be described with reference to the drawings.

### (First Embodiment)

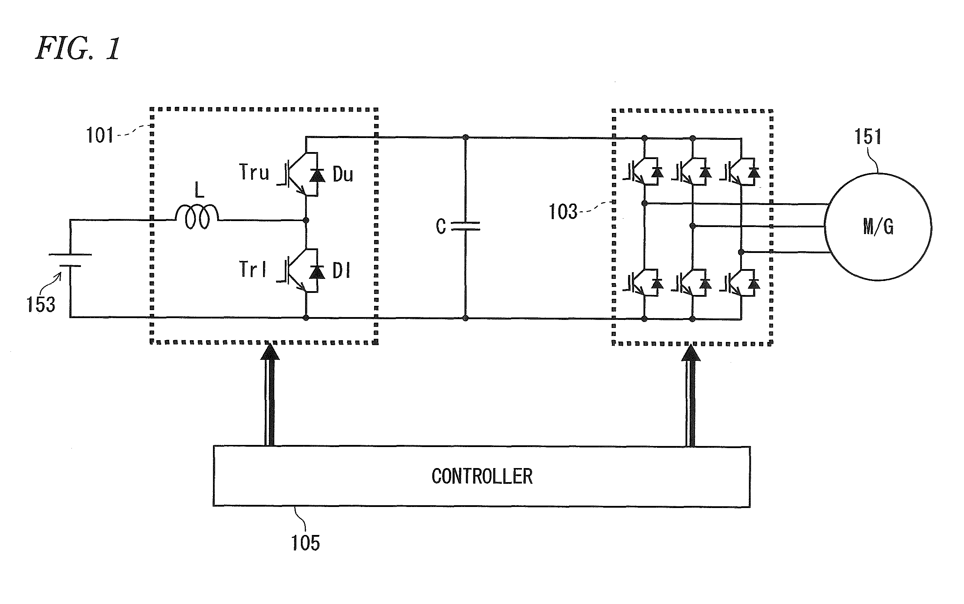

FIG. 1 illustrates a system including a load drive apparatus according to a first embodiment. In FIG. 1, elements identical to or equivalent to those included in the system illustrated in FIG. 5 are identified by the same reference characters or equivalent reference characters. The load drive apparatus according to the first embodiment serves as an apparatus for controlling an operation of a rotary inductive load (load) 151 which is operated as a motor at the time of power running driving and operated as a generator at the time of regenerative operation.

As illustrated in FIG. 1, the load drive apparatus according to the first embodiment includes: a boost converter (converter) 101; a smoothing capacitor (capacitor) C; an inverter 103; and a controller 105. The converter 101, the capacitor C and the inverter 103 are provided between the load 151 and a battery 153 for outputting a DC high voltage (e.g., 100 V to 200 V). The smoothing capacitor C is provided in parallel between the converter 101 and the inverter 103. Similarly to the system of FIG. 5, the system illustrated in FIG. 1 is installed on a so-called "parallel hybrid vehicle" illustrated in FIG. 7, for example. In the hybrid vehicle, a drive shaft of a motor MOT is connected to wheels Wr and Wl via no clutch.

The converter 101 has: two-stage upper and lower transistors Tru and Trl connected in series; free wheel diodes Du and Dl connected in parallel to the upper and lower transistors, respectively; and a reactor L provided for the battery 153 (primary side). The converter 101 performs a switching operation on the transistors, thereby boosting an output voltage of the battery 153. Further, when a regenerative operation is performed by the load 151, the converter 101 performs a switching operation on the transistors, thereby reducing an output voltage of the inverter 103.

In the present embodiment, the lower (low side) transistor Trl is a normally-off type semiconductor element that enters an OFF state when no voltage is applied to its base. On the other hand, the upper (high side) transistor Tru is a normally-off type semiconductor element that enters an ON state when no voltage is applied to its base and enters an OFF state upon application of a voltage thereto. Accordingly, when the converter 101 performs a boosting operation, levels of voltages applied to the bases of the transistors Tru and Trl are equal to each other, and an "H" level voltage or an "L" level voltage is applied to each base in an alternating manner. As a result, the transistors Tru and Trl periodically perform inversion operations.

The capacitor C smoothes an output voltage of the converter 101. Further, when a regenerative operation is performed by the load 151, the capacitor C smoothes the output voltage of the inverter 103.

The inverter 103 has: two-stage upper and lower transistors connected in series and associated with respective phases; and free wheel diodes connected in parallel to the respective transistors. The inverter 103 converts the output voltage of the converter 101 into a three-phase (U, V and W) AC voltage by performing a switching operation on the transistors. Further, when a regenerative operation is performed by the load 151, the inverter 103 converts a three-phase AC voltage, generated by the load 151, into a DC voltage by performing a switching operation on the transistors.

The controller 105 controls the switching operations of the respective transistors included in the converter 101 and the inverter 103.

In the event of failure of the controller 105 of the above-described load drive apparatus, the switching operations of the converter 101 and the inverter 103 will not be performed. In this case, the upper transistor Tru of the converter 101 is a normally-on type transistor and is thus in an ON state. On the other hand, all the transistors included in the converter 101 and the inverter 103, except for the upper transistor Tru of the converter 101, are normally-off type transistors and thus enter OFF states. As mentioned above, the free wheel diodes are connected in parallel to the respective transistors. A cathode of each free wheel diode is connected to a collector of the associated transistor, and an anode of each free wheel diode is connected to an emitter of the associated transistor. Accordingly, power (regenerative power) generated by a regenerative operation of the load 151 is charged in the battery 153 via the upper free wheel diodes included in the inverter 103, the upper transistor Tru of the converter 101, and the reactor L.

In the event of failure of the converter 101, the upper transistor Tru of the converter 101 enters an ON state, and the lower transistor Trl enters an OFF state. Also in this case, the regenerative power of the load 151 is charged in the battery 153 via the inverter 103, the upper transistor Tru of the converter 101, and the reactor L.

In the present embodiment, the upper transistor Tru of the converter 101 is a normally-on type transistor, and therefore, the transistor Tru is in an ON state in the event of failure of the controller 105 or the converter 101. Accordingly, even in the event of failure of the controller 105 or the converter 101, the regenerative power of the load 151 is charged in the battery 153 via the inverter 103, the upper transistor Tru of the converter 101, and the reactor L. Thus, even in the event of failure of the controller 105 or the converter 101, a current path is formed between the load 151 and the battery 153 via the transistor Tru, thereby preventing an overcharged state of the capacitor C.

When a failure has also occurred in the inverter 103 in the event of failure of the converter 101, the inverter 103 cannot perform field weakening control on the load 151. In that case, a counter electromotive force generated in the load 151 is higher as compared with a case where the inverter 103 functions normally. Accordingly, the regenerative power of the load 151 is higher when a failure has occurred in the inverter 103. Therefore, the above-described effects of the present embodiment are further enhanced when the inverter 103 cannot perform the switching operation.

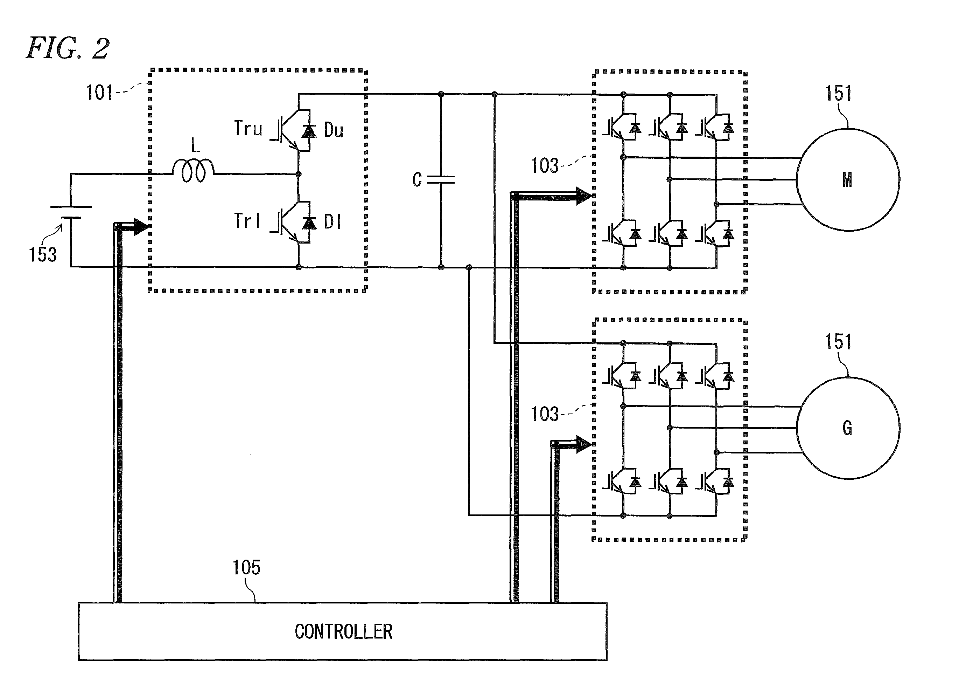

When two loads such as a motor M and a generator G are provided as illustrated in FIG. 2, the inverter 103 is provided in parallel for each load, and the capacitor C and the converter 101 are provided so as to be shared between the two loads. Similarly to the system of FIG. 6, the system illustrated in FIG. 2 is installed on a so-called "series hybrid vehicle" illustrated in FIG. 8 or a so-called "series/parallel switching hybrid vehicle" illustrated in FIG. 9, for example. In the hybrid vehicle, a drive shaft of a motor MOT is connected to wheels Wr and Wl via no clutch.

### (Second Embodiment)

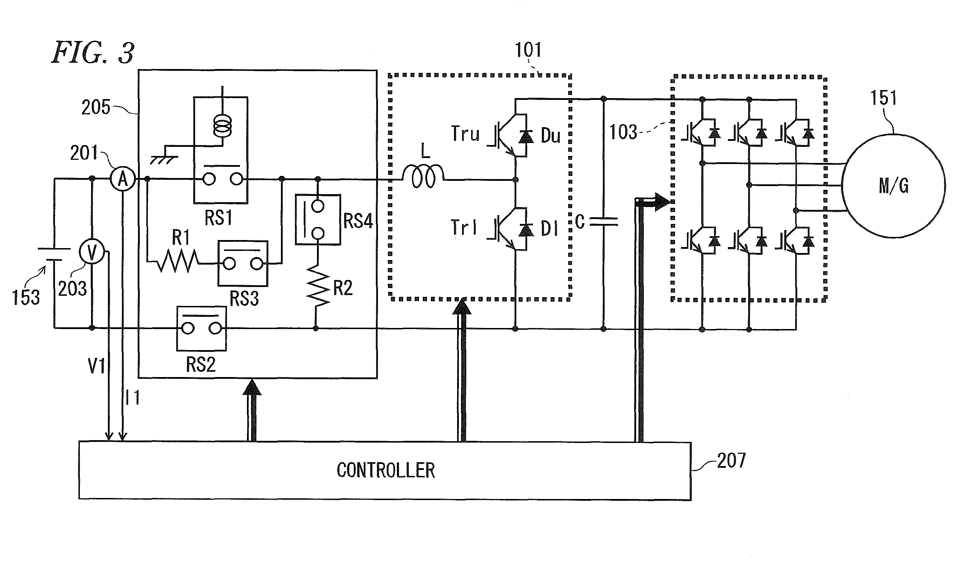

FIG. 3 illustrates a system including a load drive apparatus according to a second embodiment. As illustrated in FIG. 3, the load drive apparatus according to the second embodiment further includes a current sensor 201, a voltage sensor 203 and a relay unit 205 in addition to the constituent elements of the load drive apparatus according to the first embodiment. Furthermore, a controller 207 also controls the relay unit 205 in addition to controlling the switching operations of the converter 101 and the inverter 103. Other than these points, the second embodiment is similar to the first embodiment. Accordingly, elements identical to or equivalent to those of the load drive apparatus according to the first embodiment are identified by the same reference characters or equivalent reference characters, and the description thereof will be simplified or omitted.

The current sensor 201 detects a charge and discharge current I1 of the battery 153. A signal indicative of the charge and discharge current I1 of the battery 153, which is detected by the current sensor 201, is sent to the controller 207. The voltage sensor 203 detects an output voltage V1 of the battery 153. A signal indicative of the output voltage V1 of the battery 153, which is detected by the voltage sensor 203, is sent to the controller 207.

The relay unit 205 is provided between the battery 153 and the converter 101 to open/close a power supply path between the battery 153 and the load 151. As illustrated in FIG. 3, the relay unit 205 has: a positive-side main relay RS1; a negative-side main relay RS2; a preliminary charge relay RS3; a discharge relay RS4; a current limiting resistor R1; and a discharge resistor R2. Since a high current flows through a current supply path, the positive-side main relay RS1, the negative-side main relay RS2 and the preliminary charge relay RS3 are mechanical relays formed by mechanical contact points and coils. In FIG. 3, illustration of the coils of the negative-side main relay RS2 and the preliminary charge relay RS3 is omitted.

The controller 207 controls the opening/closing of the power supply path, which is performed by the relay unit 205. For example, when an ignition switch of a vehicle on which the system illustrated in FIG. 3 is installed is changed from an OFF state to an ON state, the controller 207 turns ON the negative-side main relay RS2 and the preliminary charge relay RS3 in this order. Upon turning ON of the two relays, charging of the capacitor C starts. In this case, flow of a high rush current is limited by the current limiting resistor R1. After the capacitor C has been charged, the controller 207 turns ON the positive-side main relay RS1 and turns OFF the preliminary charge relay RS3. On the other hand, when the ignition switch of the vehicle is changed from the ON state to the OFF state or in the event of failure of the converter 101 or the inverter 103, the controller 207 turns OFF the positive-side main relay RS1 and the negative-side main relay RS2.

The controller 207 derives an SOC (State Of Charge) of the battery 153 based on the charge and discharge current I1 or output voltage V1 of the battery 153. When the SOC is derived based on the charge and discharge current I1 of the battery 153, the controller 207 adds up a charge current and a discharge current of the battery 153 for each given period of time to calculate a total charge amount and a total discharge amount, and adds or subtracts the total charge amount and total discharge amount to or from an initial SOC or an SOC obtained immediately before start of charge and discharge, thus deriving the SOC of the battery 153. On the other hand, when the SOC is derived based on the output voltage V1 of the battery 153, the controller 207 derives the SOC in accordance with the output voltage V1 of the battery 153 that is being charged and discharged. A relationship between the output voltage V1 of the battery 153 and the SOC is obtained as a substantially linear shape within a range between a lower limit SOC and an upper limit SOC.

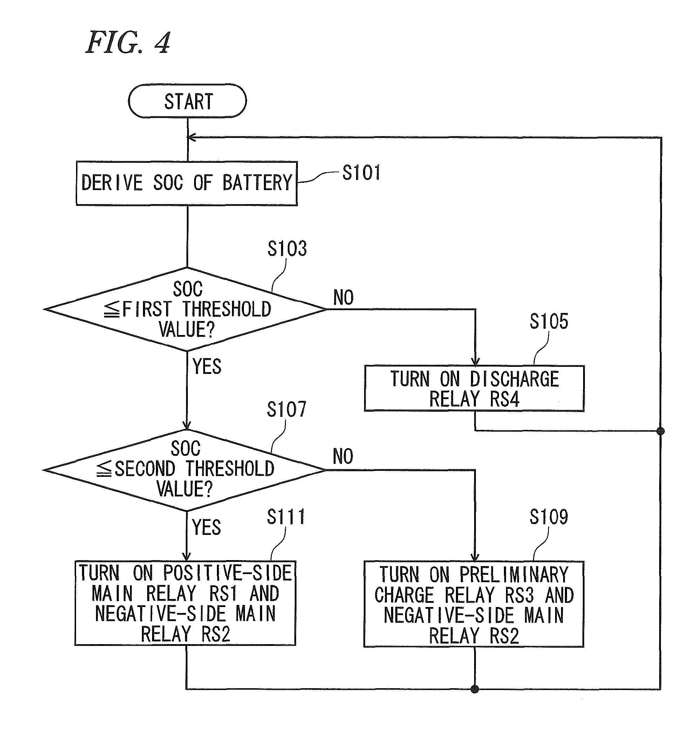

When a regenerative operation is performed by the load 151 in the event of failure of the converter 101 or the inverter 103, the controller 207 controls the relay unit 205 in accordance with the SOC of the battery 153. FIG. 4 illustrates a process in the controller 207 to control the relay unit 205 in accordance with the SOC of the battery 153. As illustrated in FIG. 4, the controller 207 derives the SOC of the battery 153 (Step S101). Subsequently, the controller 207 makes a comparison between the SOC of the battery 153 and a first threshold value, e.g., 80% (Step S103), and the processing proceeds to Step S105 when the SOC exceeds the first threshold value and proceeds to Step S107 when the SOC is equal to or lower than the first threshold value.

In Step S 105, the controller 207 turns ON the discharge relay RS4 of the relay unit 205, and turns OFF the other relays. On the other hand, in Step S107, the controller 207 makes a comparison between the SOC of the battery 153 and a second threshold value (e.g., 60%) which is lower than the first threshold value, and the processing proceeds to Step S109 when the SOC exceeds the second threshold value and proceeds to Step S111 when the SOC is equal to or lower than the second threshold value. In Step S109, the controller 207 turns ON the preliminary charge relay RS3 and the negative-side main relay RS2 of the relay unit 205, and turns OFF the other relays. On the other hand, in Step S111, the controller 207 turns ON the positive-side main relay RS1 and the negative-side main relay RS2 of the relay unit 205, and turns OFF the other relays.

When the processing proceeds to Step S105, i.e., when the SOC of the battery 153 is higher than the first threshold value, the discharge relay RS4 is turned ON and the other relays are turned OFF; hence, the constituent elements of the converter 101 and the subsequent constituent elements, which are located adjacent to the load 151, will be electrically disconnected from the battery 153. In this case, the regenerative power of the load 151 is stored in the capacitor C, but the power stored in the capacitor C is consumed by the discharge resistor R2.

Further, when the processing proceeds to Step S109, i.e., when the SOC of the battery 153 is higher than the second threshold value but is equal to or lower than the first threshold value, the preliminary charge relay RS3 and the negative-side main relay RS2 are turned ON, and the other relays are turned OFF. In this case, the regenerative power of the load 151 is partially consumed by the resistor R1, but the remaining power is charged in the battery 153. On the other hand, when the processing proceeds to Step S111, i.e., when the SOC of the battery 153 is equal to or lower than the second threshold value, the positive-side main relay RS1 and the negative-side main relay RS2 are turned ON, and the other relays are turned OFF. In this case, the regenerative power of the load 151 is charged in the battery 153.

In the present embodiment, even in the event of failure of the converter 101 or the inverter 103, the regenerative power of the load 151 is at least partially charged in the battery 153 without disconnecting the converter 101 or the inverter 103 from the battery 153 when the battery 153 is not fully charged. Specifically, when the battery 153 is fully charged, the regenerative power of the load 151 is consumed by the discharge resistor R2. Thus, the regenerative power can be charged or consumed in accordance with the SOC of the battery.

In the embodiments, the converter 101 and the inverter 103 include bipolar transistors, but may alternatively include switching elements such as FETs or IGBTs.

Although the present invention has been described with reference to the above-mentioned embodiments, various changes and modifications may be made to the embodiments without departing from the spirit and scope of the present invention.

The present application is based on Japanese Patent Application No. 2010-045873 filed in Japan on March 2, 2010, the contents of which are hereby incorporated by reference.

### DESCRIPTION OF THE REFERENCE CHARACTERS

- 101: boost converter (converter)
- 103: inverter
- 105, 207: controller
- 151: rotary inductive load
- 153: battery
- 201: current sensor
- 203: voltage sensor
- 205: relay unit
- C: smoothing capacitor (capacitor)
- Du, Dl: free wheel diode
- L: reactor
- Tru, Trl: transistor
- RS1: positive-side main relay
- RS2: negative-side main relay
- RS3: preliminary charge relay
- RS4: discharge relay
- R1: current limiting resistor
- R2: discharge resistor

## Claims

1. A load drive apparatus, including:
a converter which has two switching elements connected in series and through which a DC voltage, outputted from a battery, is converted into a DC voltage of a different level;
an inverter through which the DC voltage, outputted from the converter, is converted into an AC voltage and the AC voltage is applied to a rotary inductive load; and
a capacitor provided between the converter and the inverter so as to be in parallel to the converter and the inverter,
wherein one of the two switching elements, which constitutes part of a power supply path extending from the battery to the rotary inductive load, is a normally-on type semiconductor element.

2. The apparatus of Claim 1, further including:
a switch section having
a first path opening/closing unit for opening/closing the power supply path,
a second path opening/closing unit connected in series and provided in parallel to the capacitor so as to be located closer to the rotary inductive load than the first path opening/closing unit, and
a resistor;
a storage capacity deriving section for deriving a storage capacity of the battery based on a charge and discharge current or an output voltage of the battery; and
a switch controller for controlling, when no switching operation is performed on the two switching elements of the converter, the switch section
so as to open the first path opening/closing unit and close the second path opening/closing unit when the storage capacity of the battery is higher than a threshold value, and
so as to close the first path opening/closing unit and open the second path opening/closing unit when the storage capacity of the battery is equal to or lower than the threshold value.

3. The apparatus of Claim 1 or 2,
wherein the rotary inductive load is used as a driving source for a vehicle and is connected to a wheel of the vehicle via a power transmission path through which connection/disconnection for power transmission between the rotary inductive load and the wheel cannot be performed.
